# EUROPÄISCHE PATENTANMELDUNG

(11) **EP 1 798 846 A1**
(43) Veröffentlichungstag der Anmeldung: **20.06.2007**
(21) Anmeldenummer: 06123286.4
(22) Anmeldetag: 31.10.2006
(51) Int. Cl.: H02M 7/00

(54) **Elektrisches Gerät mit Batteriefach und Netzteil**

(30) Priorität: 25.11.2005 DE 202005018566 U
(71) Anmelder: GIRA Giersiepen GmbH & Co. KG, 42477 Radevormwald (DE)
(72) Erfinder: Kemmann, Harald, 42555 Velbert (DE)
(74) Vertreter: Patentanwälte Dr. Solf & Zapf

(57) **Zusammenfassung**

Die Erfindung betrifft ein Elektrisches Gerät (1) mit einem Gerätegehäuse (2) und einem Aufnahmeraum (4) für eine aus einer oder mehreren Batterie- und/oder Akkuzellen bestehende Gerätebatterie zur netzunabhängigen Spannungsversorgung mit einer Gleichspannung sowie mit Gerätekontakten zur elektrischen Kontaktierung von korrespondierenden Batteriekontakten. Hierbei ist ein in den Aufnahmeraum (4) eingesetztes Netzteil (10) vorgesehen, das primärseitig mit einer Netzspannung (U₁) verbindbar ist, und das sekundärseitig für die benötigte Gleichspannung (U₂) ausgelegt ist und Kontaktelemente (12a, 12b) zum Kontaktieren der Gerätekontakte aufweist.

## Beschreibung

Die vorliegende Erfindung betrifft ein elektrisches Gerät mit einem Gerätegehäuse und einem Aufnahmeraum ("Batteriefach") für eine aus einer oder mehreren Batterie- und/oder Akkuzellen bestehende Gerätebatterie zur netzunabhängigen Spannungsversorgung mit einer Gleichspannung sowie mit Gerätekontakten zur elektrischen Kontaktierung von korrespondierenden Batteriekontakten.

Bei einem solchen Gerät kann es sich beispielsweise um ein Audiogerät, wie ein Radio, einen CD-Player, MP3-Player oder dergleichen handeln. Durch den netzunabhängigen Batterie- oder Akkubetrieb sind solche Geräte mobil einsetzbar. Weiterhin werden auch sogenannte Rauchmelder in Gebäuden häufig netzunabhängig mit einer Batterie-/Akkuversorgung betrieben. Dadurch können sie optimal an Stellen, die zur Rauch-Detektion prädestiniert sind, plaziert werden, ohne dass dort ein Netzanschluss zur Verfügung stehen muß.

Ein Nachteil von batteriebetriebenen Geräten ist jedoch eine durch die Batterie-/Akkukapazität begrenzte Nutzungsdauer. Es sind deshalb natürlich auch Geräte mit integriertem Netzteil bekannt. Dabei wird aber zur Unterbringung der Netzteil-Komponenten innerhalb des Gerätes ein zusätzlicher Bauraum benötigt. Speziell bei Rauchmeldern sind auch rein netzbetriebene Ausführungen bekannt, die aber nicht für Einsatzorte ohne Netzanschluss geeignet sind.

Der vorliegenden Erfindung liegt die Aufgabe zugrunde, bei einem Gerät der genannten Art durch einfache und preisgünstige Mittel die Anwendungsmöglichkeiten zu erweitern, d. h. eine hohe Anwendungsvariabilität zu erreichen.

Erfindungsgemäß wird dies durch ein lösbar (herausnehmbar/auswechselbar) in den Aufnahmeraum des Gerätes eingesetztes Netzteil erreicht, welches primärseitig mit einer Netzspannung verbindbar ist, und welches sekundärseitig für die benötigte Gleichspannung ausgelegt ist und Kontaktelemente zum Kontaktieren der Gerätekontakte aufweist. Somit ist das Netzteil bezüglich seiner Form und Größe so ausgelegt, dass es in den Batterie-Aufnahmeraum des Gerätes passt und dadurch auf sehr einfache Weise anstatt der eigentlich vorgesehenen Gerätebatterie in den Aufnahmeraum des Gerätes eingesetzt werden kann, wobei die sekundärseitige Kontaktierung über die selben, eigentlich für die Gerätebatterie vorgesehenen Gerätekontakte erfolgt, und zwar insbesondere unmittelbar oder aber mittelbar. Dadurch ist das selbe (unveränderte) Gerät wahlweise mit dem erfindungsgemäßen Netzteil in Netzbetrieb oder nach Entfernen des Netzteils in Batteriebetrieb einsetzbar, ohne dass - zusätzlich zu dem Batterie-Aufnahmeraum - ein weiterer Raum innerhalb des Gerätes zur Unterbringung von Netzteilkomponenten erforderlich wäre. Vielmehr kann der ohnehin für die Gerätebatterie vorhandene Raum bei Bedarf zur Unterbringung des Netzteils genutzt werden. Hierdurch eignet sich die Erfindung besonders für kleine, kompakte Geräte, insbesondere für Rauchmelder.

Durch den wahlweise möglichen Netzbetrieb ergeben sich besondere Vorteile:
- gute Vernetzbarkeit von mehreren Rauchmeldern, da deren Sender/Empfänger ständig in Betrieb sein können,
- optische und/oder akustische Signalgebung mit hoher Leistung möglich (z. B. sogenannte "Blitz-LED"),
- bestimmte Verbraucher mit hoher Leistung, wie z. B. Display-Beleuchtungen, können ständig in Betrieb sein und müssen nicht in einem Stromsparmodus abgeschaltet werden.

Speziell bei Rauchmeldern wird allerdings bei Netzbetrieb eine Notstromversorgung für mindestens 72 Stunden gefordert. Daher weist das erfindungsgemäße Netzgerät in bevorzugter Ausgestaltung eine integrierte Notstromversorung insbesondere in Form einer oder mehrerer Knopfzellen auf.

Die vorliegende Erfindung betrifft - zusätzlich zu dem Gerät - auch das erfindungsgemäße Netzteil als solches in seiner Ausgestaltung zum Einsetzen in einen Batterie-Aufnahmeraum eines elektrischen Gerätes.

Weitere vorteilhafte Ausgestaltungen der Erfindung sind in den abhängigen Ansprüchen und der nachfolgenden Beschreibung enthalten.

Anhand von in der Zeichnung veranschaulichten, bevorzugten Ausführungsbeispielen soll die Erfindung genauer erläutert werden. Dabei zeigen:
- Fig. 1: eine Perspektivansicht eines erfindungsgemäßen Gerätes in einer bevorzugten Ausgestaltung als Rauchmelder, wobei eine Montageseite mit einem Aufnahmeraum (Batteriefach) für eine selbst nicht dargestellte Gerätebatterie gezeigt ist,
- Fig. 2: eine Perspektivansicht einer bevorzugten Ausführungsform eines erfindungsgemäßen Netzteils,
- Fig. 3: eine Perspektivansicht des Netzteils gemäß Fig. 2 aus einer anderen Blickrichtung in einer bevorzugten Ausgestaltung,
- Fig.4: eine weitere Perspektivansicht des Netzteils gemäß Fig. 3 mit zusätzlichem Netzanschlusskabel,
- Fig. 5: eine weitere Perspektive der Ausführung gemäß Fig. 4,
- Fig. 6: eine Ausführungsvariante des Netzteils in einer Ansicht ähnlich Fig. 3,
- Fig.7: eine stark schematische Perspektivansicht von inneren Bestandteilen des Netzgerätes und
- Fig. 8: ein Schaltbild des Netzteils in einer beispielhaften Ausführung als primär getaktetes Schaltnetzteil.

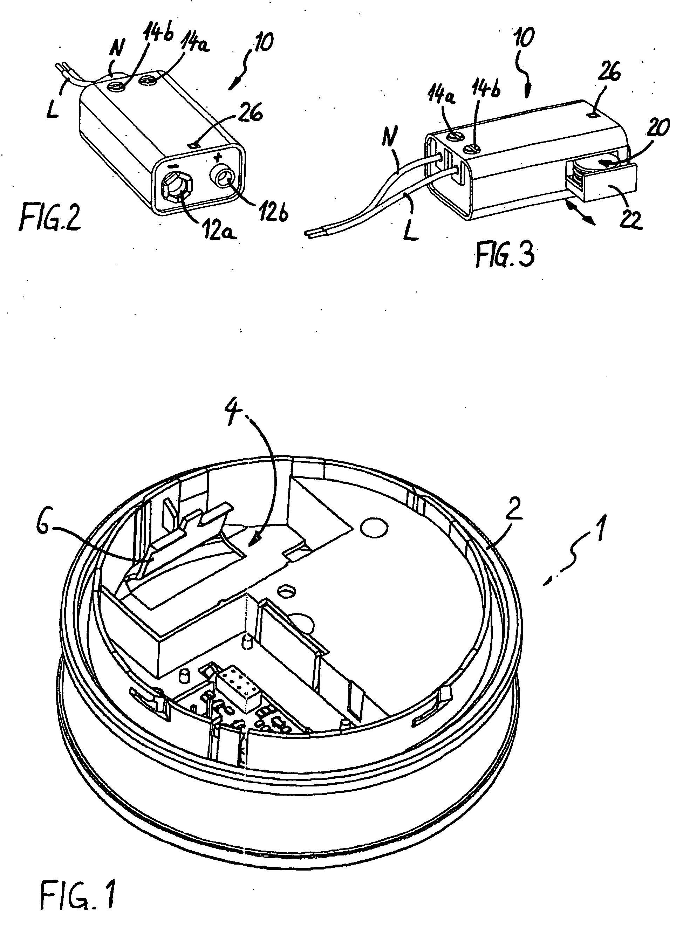

In Fig. 1 ist ein elektrisches Gerät 1 in einer bevorzugten Ausführung als Rauchmelder dargestellt, und zwar in einer Ansicht auf eine Montageseite, mit der das Gerät 1 über ein nicht dargestelltes, in der Regel scheibenförmiges Montageelement an einer Decken- oder Wandfläche befestigt wird. Das Gerät 1 weist ein Gerätegehäuse 2 auf, das auf der Montageseite einen Aufnahmeraum 4 zum Einsetzen einer nicht dargestellten Gerätebatterie aufweist.

Im Zusammenhang mit der vorliegenden Erfindung bedeutet der Begriff "Gerätebatterie", dass es sich um eine oder mehrere Batterie- oder Akku-Elemente handeln kann, d. h. um nicht wieder aufladbare Primärzellen oder um wieder aufladbare Sekundärzellen (Akkumulatoren). Dabei kann die Gerätebatterie aus einem oder mehreren Elementen eines Standard-Batterietypen bestehen. Ein Rauchmelder wird üblicherweise mit einem 9 Volt-Block (auch E-Block mit der IEC Bezeichnung F22 oder AM-6 oder Typ IEC 6 LR 61 genannt) betrieben, der in den Aufnahmeraum 4 eingesetzt und vorzugsweise mit einem Fixierteil 6 insbesondere klemmend fixiert wird. Das Gerät 1 weist im Bereich des Batterie-Aufnahmeraumes 4 elektrische Gerätekontakte (in Fig. 1 nicht erkennbar) zur Kontaktierung von korrespondierenden Batteriekontakten auf.

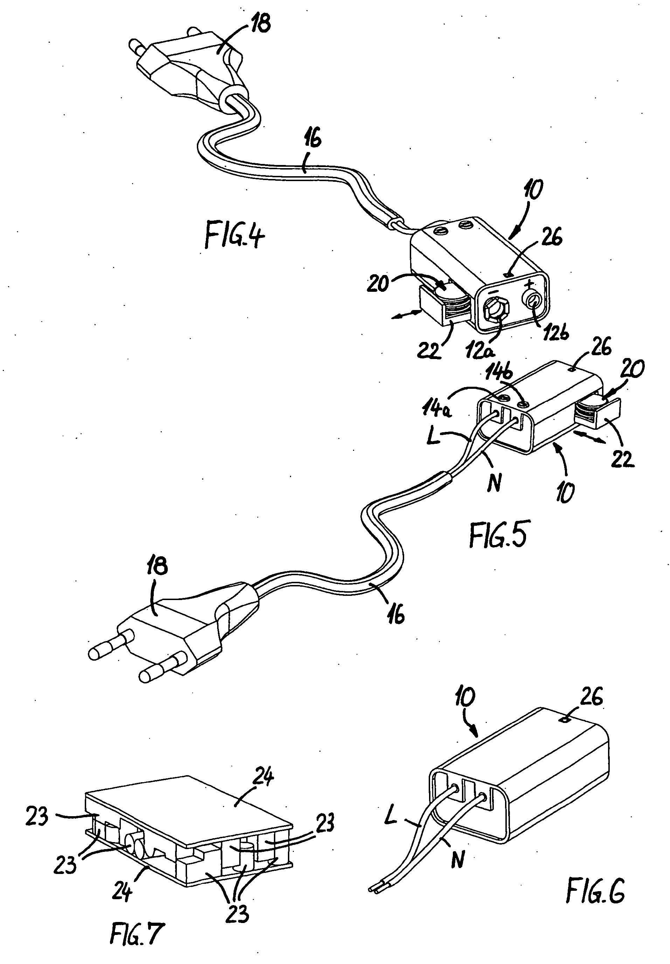

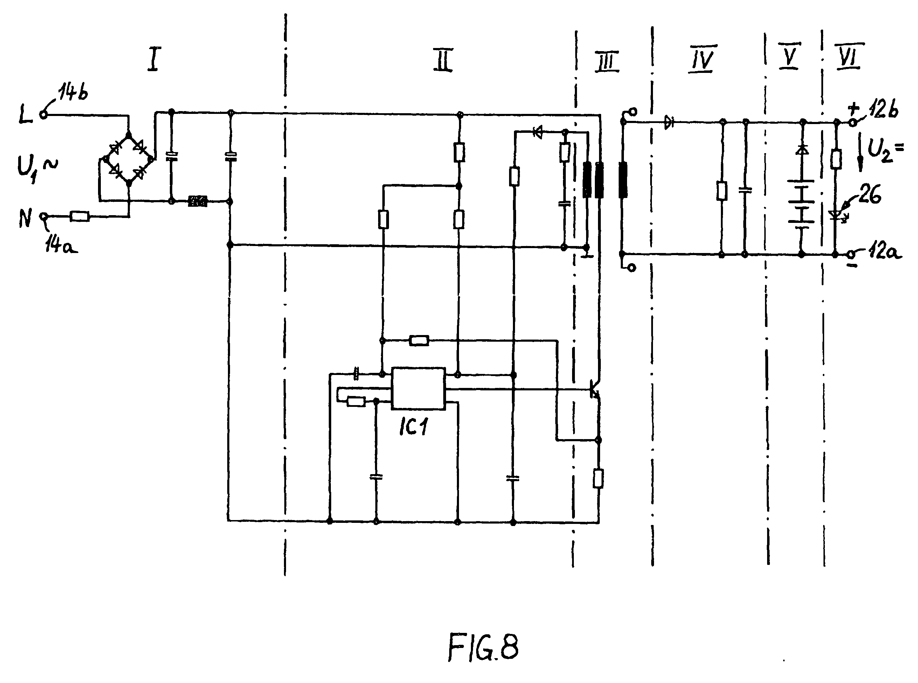

Erfindungsgemäß ist nun für das Gerät 1 ein spezielles, neuartiges Netzteil 10 vorgesehen, siehe hierzu die Figuren 2 bis 6. Dieses Netzteil 10 ist hinsichtlich seiner äußeren Raumform und Größe so konzipiert, dass es - anstatt der eigentlichen Gerätebatterie - in den Aufnahmeraum 4 eingesetzt werden kann. Zum geräteseitigen Anschluss weist das Netzteil 10 Kontaktelemente 12a, 12b auf, die vorzugsweise den Kontakten der eigentlichen Gerätebatterie entsprechen. Zum Ersatz eines 9 V-Blockes handelt es sich bekanntlich um druckknopfartige Kontaktelemente 12a, 12b. Über diese Kontaktelemente 12a, b gibt das Netzteil 10 eine sekundärseitige Gleichspannung U₂ ab (vgl. auch den Schaltplan in Fig. 8). Grundsätzlich kann aber zum sekundärseitigen Anschluss auch eine Art Anschlussadapter zum mittelbaren Verbinden von (beliebigen) Netzteil-Kontakten mit den Gerätekontakten vorgesehen sein. Primärseitig ist das Netzteil 10 mit einer üblichen Netzspannung U₁ verbindbar, wozu es vorzugsweise Anschlüsse 14a, 14b zum lösbaren Anschluss von Netzleitern L, N aufweist (Fig. 2 bis 5). Die Netzleiter L, N bzw. die Leiter eines Netz-Anschlusskabels 16 können aber gemäß Fig. 6 auch fest (unlösbar) an dem Netzteil 10 angeschlossen sein, und anderendig kann optional ein üblicher Netzstecker 18 (Fig. 4, 5) zum Einstecken in eine übliche Steckdose vorgesehen sein. Bei der in Fig. 2 bis 5 dargestellten, bevorzugten Ausführung sind die Anschlüsse 14a, b als Schraubklemmen ausgebildet, es sind aber auch Steckklemmen möglich, wie sie heute in der Elektro-Installationstechnik verbreitet sind.

Zur Realisierung der relativ kleinen Raumform ist es vorteilhaft, das Netzteil 10 als primär getaktetes Schaltnetzteil mit galvanischer Trennung zwischen Primär- und Sekundärseite auszubilden. Hierzu wird an dieser Stelle auf die Fig. 8 verwiesen, wonach die Schaltung des Netzteils 10 einen primären Gleichrichter I, einen elektronischen Zerhacker (Takter) II, einen Transformator III, einen sekundären Gleichrichter IV, vorzugsweise einen Notstromversorgungsteil V sowie gegebenenfalls eine Funktionsstatus-Anzeige VI aufweist. Der Zerhacker II arbeitet mit einer Taktfrequenz von beispielsweise ca. 250 kHz. Die Notstromversorgung kann mit Vorteil mit einer intelligenten Steuerung in Form eines µ-Controllers ausgerüstet sein.

Die Notstromversorgung kann gemäß Fig. 3 bis 5 bevorzugt eine oder mehrere Knopfzellen 20 aufweisen, die mit besonderem Vorteil auswechselbar in einer insbesondere als Schubfach 22 ausgebildeten Aufnahme des Netzteils 10 angeordnet sind. Für die bevorzugte Anwendung können beispielsweise drei Knopfzellen 20 zu je 3 V in Reihe (= 9 V) angeordnet sein. In einer nicht aufladbaren Ausführung kann es sich um Lithium-Mangan-Dioxid-Zellen (LiMnO₂) oder in einer aufladbaren Version mit Vorteil um Vanadium-Pentoxid-Zellen (V₂O₅) handeln. Damit kann eine Notstromversorgung jedenfalls für mindestens 72 Stunden gewährleistet werden.

Primärseitig ist das Netzteil 10 für eine Netzspannung U₁ im Bereich von 110 V bis 240 V ausgelegt. Sekundärseitig kann eine Auslegung für bevorzugt 9 V oder 1,5 V bzw. ein Vielfaches von 1,5 V vorgesehen sein.

Alternativ zu der bevorzugten Ausführung kann das Netzteil 10 bezüglich seiner äußeren Raumform auch einem anderen Standard-Batterietyp entsprechen, wie beispielsweise

| ANSI | Bezeichnung | IEC (C) | IEC (KOH) |
|---|---|---|---|
| AAA | Micro | R03/UM-4 | LR03/AM-4 |
| AA | Mignon | R6/UM-3 | LR6/AM-3 |
| C | Baby | R14/UM-2 | LR14/AM-2 |
| D | Mono | R20/UM-1 | LR20/AM-1 |

oder dergleichen.

Dabei kann das Netzteil 10 bezüglich Form, Größe und Lage der Geräte-Kontakte auch so ausgelegt sein, dass es nicht nur ein Standard-Batterieelement ersetzt, sondern eine Mehrfachanordnung aus mindestens zwei geometrisch parallel und/oder in Reihe angeordneten Batterien. Grundsätzlich kann zudem auch eine Ausgestaltung in Form beliebiger Sonder-Batterietypen vorgesehen sein.

In Fig. 7 ist stark schematisch angedeutet, dass Bauteile 23 der Schaltung auf mindestens zwei Leiterplatten 24 angeordnet sind, wobei die Leiterplatten 24 parallel zueinander angeordnet sind und sich die Bauteile 23 auf den einander zugekehrten Seiten befinden, und zwar so, dass die Bauteile 23 jeweils Freiräume auf der Seite der anderen Leiterplatte 24 nutzen und dadurch eine hohe Packungsdichte erreicht wird. Hierdurch wird einerseits die gesamte notwendige Fläche reduziert und das Volumen innerhalb des Netzteils 10 optimal genutzt. Dadurch ist die Schaltung in dem relativ kleinen, der Form einer Batterie entsprechenden Gehäuse des Netzteils 10 unterbringbar.

Wie sich noch aus Fig. 2 bis 6 ergibt, weist das Netzteil 10 zweckmäßig als Funktionsstatus-Anzeige VI (vgl. das Schaltbild in Fig. 8) insbesondere mindestens eine LED 26 auf. Hierdurch kann der jeweilige Funktionsstatus angezeigt werden, beispielsweise Betriebsbereitschaft (Netz- und/oder Sekundärspannung vorhanden), Kurzschluss, Notstrombetrieb oder dergleichen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Elektrisches Gerät (1) mit einem Gerätegehäuse (2) und einem Aufnahmeraum (4) für eine aus einer oder mehreren Batterie- und/oder Akkuzellen bestehende Gerätebatterie zur netzunabhängigen Spannungsversorgung mit einer Gleichspannung sowie mit Gerätekontakten zur elektrischen Kontaktierung von korrespondierenden Batteriekontakten,
**gekennzeichnet durch** ein in den Aufnahmeraum (4) eingesetztes Netzteil (10), das primärseitig mit einer Netzspannung (U₁) verbindbar ist, und das sekundärseitig für die benötigte Gleichspannung (U₂) ausgelegt ist und Kontaktelemente (12a, 12b) zum Kontaktieren der Gerätekontakte aufweist.

2. Gerät nach Anspruch 1,
**dadurch gekennzeichnet, dass** die Kontaktelemente (12a, 12b) des Netzteils (10) zum unmittelbaren Kontaktieren der Gerätekontakte bezüglich Anordnung und Art den Batteriekontakten der eigentlich vorgesehenen Gerätebatterie entsprechen.

3. Gerät nach Anspruch 1 oder 2,
**dadurch gekennzeichnet, dass** das Netzteil (10) primärseitig Anschlüsse (14a, 14b), insbesondere in Form von Schraub- oder Steckklemmen, für Netzleiter (L, N) aufweist.

4. Gerät nach Anspruch 3,
**dadurch gekennzeichnet, dass** die Netzleiter (L, N) anderendig mit einem Netzstecker (18) verbunden sind.

5. Gerät nach einem der Ansprüche 1 bis 4,
**dadurch gekennzeichnet, dass** das Netzteil (10) als primär getaktetes Schaltnetzteil mit galvanischer Trennung ausgebildet ist.

6. Gerät nach einem der Ansprüche 1 bis 5,
**dadurch gekennzeichnet, dass** das Netzteil (10) eine Notstromversorgung (V) insbesondere in Form einer oder mehrerer Knopfzellen (20) aufweist.

7. Gerät nach Anspruch 6,
**dadurch gekennzeichnet, dass** die Knopfzellen (20) auswechselbar in einer insbesondere als Schubfach (22) ausgebildeten Aufnahme des Netzteils (10) angeordnet sind.

8. Gerät nach einem der Ansprüche 1 bis 7,
**dadurch gekennzeichnet, dass** das Netzteil (10) primärseitig für eine Netzspannung (U1) im Bereich von 110 V bis 240 V ausgelegt ist.

9. Gerät nach einem der Ansprüche 1 bis 8,
**dadurch gekennzeichnet, dass** das Netzteil (10) sekundärseitig für eine Gleichspannung (U₂) von 9 V oder 1,5 V oder ein Vielfaches von 1,5 V ausgelegt ist.

10. Gerät nach einem der Ansprüche 1 bis 9,
**dadurch gekennzeichnet, dass** dasNetzteil(10)bezüglich seiner äußeren Raumform im Wesentlichen einem Standard-Batterietyp entspricht.

11. Gerät nach einem der Ansprüche 1 bis 10,
**dadurch gekennzeichnet, dass** dasNetzteil(10)eineineinem Gehäuse untergebrachte Schaltung mit Bauteilen (23) aufweist, die derart auf einander zugewandten Seiten von zwei zueinander parallelen Leiterplatten (24) angeordnet sind, dass durch gegenseitige Ausnutzung von zwischen den Bauteilen (33) vorhandenen Freiräumen eine hohe Packungsdichte mit minimiertem Gesamtvolumen erreicht wird.

12. Gerät nach einem der Ansprüche 1 bis 11,
**dadurch gekennzeichnet, dass** dasNetzteil(10)einenprimären Gleichrichter (I), einen elektronischen Zerhacker (II), einen Transformator (III), einen sekundären Gleichrichter (IV), vorzugsweise einen Notstromversorgungsteil (V) und gegebenenfalls eine Funktionsstatus-Anzeige (VI) insbesondere mit mindestens einer LED (26) aufweist.

13. Gerät nach einem der Ansprüche 1 bis 12,
**gekennzeichnet durch** eine Ausgestaltung als Rauchmelder.

14. Netzteil (10) zum Einsetzen in einen Batterie-Aufnahmeraum (4) eines elektrischen Gerätes (1),
**gekennzeichnet durch** das Netzteil (10) betreffende Merkmale eines der Ansprüche 1 bis 12.
